(19) Europäisches Patentamt
European Patent Office
Office européen des brevets

(11) Veröffentlichungsnummer: **0 385 263 A2**

(12) **EUROPÄISCHE PATENTANMELDUNG**

(21) Anmeldenummer: **90103407.4**

(51) Int. Cl.$^5$: **B60J 7/22**

(22) Anmeldetag: **22.02.90**

(30) Priorität: **03.03.89 DE 3906903**

(43) Veröffentlichungstag der Anmeldung: **05.09.90 Patentblatt 90/36**

(84) Benannte Vertragsstaaten: **DE ES FR GB IT NL SE**

(71) Anmelder: **Webasto AG Fahrzeugtechnik**
**Kraillingerstrasse 5**
**D-8035 Stockdorf(DE)**

(72) Erfinder: **Fiegel, Gunnar**
**Kempterstrasse 3**
**D-8130 Starnberg 2(DE)**
Erfinder: **Schreiter, Stefan**
**Sachsenkamstrasse 29**
**D-8000 München 40(DE)**

(54) **Windabweiser für Fahrzeugdächer mit verschiebbarem Deckel.**

(57) Windabweiser für Fahrzeugdächer mit Deckel zum Verschließen oder Freigeben einer Dachöffnung. Der Windabweiser weist ein an der vorderkante der Dachöffnung angeordnetes, unter dem Einfluß von Federkraft in eine Betriebsstellung ausstellbares Luftleitprofil und damit verbundene Ausstellarme auf, die an einem dachfesten Teil schwenkbar angelenkt sind und durch Verschieben des Deckels in Schließrichtung das Luftleitprofil in eine Außerbetriebsstellung absenken. Das Luftleitprofil trägt eine sich mindestens nahezu über seine volle Breite erstreckende Anschlagleiste, die sich in der Betriebsstellung des Windabweisers gegen ein Widerlager an der Vorderkante der Dachöffnung anlegt und dadurch die ausstellbewegung des Windabweisers begrenzt. Die Federkraft ist auf die Biegefestigkeit der aus Luftleitprofil und Anschlagleiste bestehenden Baugruppe derart abgestimmt, daß dieser Baugruppe durch Anpressen der Anschlagleiste an das Widerlager selbsttätig eine der Dachwölbung mindestens näherungsweise entsprechende Wölbung in Längsrichtung des Luftleitprofils aufgezwungen wird.

EP 0 385 263 A2

Xerox Copy Centre

Die Erfindung bezieht sich auf einen Windabweiser für Fahrzeugdächer mit einem verschiebbaren Deckel zum wahlweisen Verschließen oder mindestens teilweisen Freigeben einer Dachöffnung, wobei der Windabweiser ein an der Vorderkante der Dachöffnung angeordnetes, langgestrecktes, quer zur Dachöffnung verlaufendes, unter dem Einfluß von Federkraft in eine Betriebsstellung ausstellbares Luftleitprofil und damit verbundene, zu beiden Seiten der Dachöffnung angeordnete Ausstellarme aufweist, die im Bereich ihres von dem Luftleitprofil abliegenden hinteren Endes an einem dachfesten Teil schwenkbar angelenkt und durch Verschieben des Deckels in die Deckelschließstellung in eine Lage verschwenkbar sind, in der sie das Luftleitprofil in eine Außerbetriebsstellung absenken, und wobei das Luftleitprofil im Bereich seiner von den Ausstellarmen abliegenden Kante eine sich mindestens nahezu über die volle Breite des Luftleitprofils erstreckende Anschlagleiste trägt, die sich in der Betriebsstellung des Windabweisers gegen ein Widerlager an der Vorderkante der Dachöffnung anlegt und dadurch die Ausstellbewegung des Windabweisers begrenzt.

Ein solcher Windabweiser ist aus der DE-OS 34 26 998 bekannt. In der Praxis hat man bei diesem ebenso wie bei anderen bekannten Windabweisern die Federkraft so bemessen, daß der Windabweiser beim Zurückschieben des Deckels zuverlässig in seine Betriebsstellung verschwenkt wird. Für die Serienfertigung werden, normalerweise anhand von Windkanaltests, die Abmessungen und die Form des Windabweisers so vorgegeben, daß auch bei geöffnetem Deckel der Fahrtwind geräuscharm über die Dachöffnung geleitet wird und unerwünschte Zugerscheinungen im Fahrzeuginneren vermieden sind. Gleichwohl kommt es im Einzelfall während der Fahrt immer wieder zu störenden Windgeräuschen und/oder zu Zug im Fahrgastraum. Dies ist insbesondere auf unvermeidbare Fertigungs- und Montagetoleranzen sowohl der festen Dachfläche als auch des Windabweisers und seiner Lagerung zurückzuführen. In gewissem Umfang kann dem dadurch begegnet werden, daß der Windabweiser nach dem Einbau in das Fahrzeug justiert wird. Abgesehen davon, daß der Erfolg einer solchen Justierung häufig zu wünschen übrig läßt, erfordert das Justieren umständliche zusätzliche konstruktive Maßnahmen und Arbeitsgänge.

Der im Patentanspruch 1 angegebenen Erfindung liegt die Aufgabe zugrunde, einen Windabweiser für Fahrzeugdächer zu schaffen, der einfach aufgebaut und montiert wer den kann und gleichwohl ungeachtet von Fertigungs- und Montagetoleranzen sowohl der festen Dachfläche als auch des Windabweisers für eine einwandfreie Windführung bei mindestens teilweise freigelegter Dachöffnung sorgt.

Diese Aufgabe wird bei einem Windabweiser der eingangs genannten Art erfindungsgemäß dadurch gelöst, daß die Federkraft auf die Biegefestigkeit der aus dem Luftleitprofil und der Anschlagleiste bestehenden Baugruppe derart abgestimmt ist, daß dieser Baugruppe durch Anpressen der Anschlagleiste an das Widerlager der Dachöffnung selbsttätig eine der Dachwölbung mindestens näherungsweise entsprechende Wölbung in Längsrichtung des Luftleitprofils aufgezwungen wird.

Der Windabweiser nach der Erfindung paßt sich selbsttätig der Lage und der Form der Vorderkante der Dachöffnung an. Er kommt daher ohne Justiermittel und entsprechende Einbau-Justierarbeiten aus. Abweichungen insbesondere der Wölbung der festen Dachfläche und des Windabweisers von den betreffenden Sollwerten werden automatisch ausgeglichen. Dadurch bleiben die vorgesehenen Windführungseigenschaften ungeachtet von Fertigungs- und Montagetoleranzen erhalten.

Zweckmäßig hat die aus Luftleitprofil und Anschlagleiste bestehende Baugruppe im entspannten Zustand eine mit dem Sollwert der Dachwölbung übereinstimmende Sollwölbung.

Der Aufbau des Windabweisers läßt sich weiter vereinfachen, wenn das Luftleitprofil mit der Anschlagleiste und vorzugsweise auch mit den Ausstellarmen einstückig verbunden ist.

In weiterer Ausgestaltung der Erfindung ist zum Aufbringen der Federkraft mindestens eine mit dem Luftleitprofil verbundene Schenkelfeder vorgesehen, deren einer Schenkel sich an dem Luftleitprofil und deren anderer Schenkel sich an einem unter dem Luftleitprofil angeordneten, dachfesten Teil abstützt. Solche Schenkelfedern erlauben es, auf das Luftleitprofil relativ hohe Federkräfte gezielt dort aufzubringen, wo dies für den Wölbungsausgleich besonders erwünscht ist.

Das freie Ende des mit dem dachfesten Teil zusammenwirkenden Schenkels der Schenkelfeder ist zweckmäßig zu einer Gleitkufe gebogen, was zu einer leichtgängigen und geräuschfreien Relativbewegung zwischen diesem Schenkel und dem dachfesten Teil beiträgt. Aus den gleichen Gründen trägt vorzugsweise der mit dem dachfesten Teil zusammenwirkende Schenkel der Schenkelfeder einen reibungs- und/oder geräuschmindernden Kunststoffüberzug.

In weiterer Ausgestaltung der Erfindung ist der Aufbau so getroffen, daß in der Außerbetriebsstellung des Windabweisers die Schenkelfeder in einer nach unten offenen Ausnehmung des Luftleitprofils vollständig verschwindet. Dadurch kann die Bauhöhe der Windabweiser-Baugruppe besonders klein gehalten werden.

In weiterer Ausgestaltung der Erfindung sind zwei mit Bezug auf einen Längssymmetrieachse des Deckels spiegelsymmetrisch angeordnete Schenkelfedern vorgesehen, die auf einem parallel zur Deckelverschieberichtung verlaufenden Lagerbolzen sitzen und deren mit dem dachfesten Teil zusammenwirkender Schenkel jeweils nach außen in Richtung auf die benachbarte Seitenkante der Dachöffnung weist. Bei dem dachfesten Teil, an dem sich die Schenkelfedern abstützen, wird es sich insbesondere um die im Bereich der Vorderkante der Dachöffnung befindliche Wasserrinne handeln. Eine solche Wasserrinne hat ein Gefälle in Richtung auf die Seitenkanten der Dachöffnung. Durch die vorstehend genannte bevorzugte Ausgestaltung können die mit dem dachfesten Teil zusammenwirkenden Schenkel der Schenkelfedern beim Einschwenken des Windabweisers dem Gefälle der Regenrinne folgen.

Als besonders günstig erwies es sich, wenn die Lagerbolzen der Schenkelfedern von dem benachbarten Außenende des Luftleitprofils einen Abstand haben, der zwischen 10 und 30 %, vorzugsweise etwa 20 %, der Gesamtlänge des Luftleitprofils beträgt.

Das Luftleitprofil kann insbesondere, gegebenenfalls zusammen mit der Anschlagleiste und/oder den Ausstellarmen, als Kunststoff-Hohlspritzteil oder als im Gasinnendruckverfahren hergestelltes Kunststoffspritzteil ausgebildet sein.

Eine weitere Vereinfachung des Gesamtaufbaus wird erzielt, wenn die Schwenklager der Ausstellarme eine für die Montage elastisch verformbare Lagerpfanne aufweisen, in die ein Lagerbolzen eingeclipst wird, der an den Ausstellarmen angeformt sein kann.

Bevorzugte Ausführungsbeispiele der Erfindung sind anhand der beiliegenden Zeichnungen näher erläutert. Es zeigen:

Fig. 1 eine Draufsicht auf einen Windabweiser nach der Erfindung,

Fig. 2 eine Ansicht des Windabweisers von hinten,

Fig. 3 einen Längsschnitt durch ein mit dem Windabweiser nach den Fign. 1 und 2 ausgestattetes Fahrzeugdach bei teilweise geöffnetem Deckel,

Fig. 4 einen Schnitt entsprechend Fig. 3 bei geschlossenem Deckel,

Fig. 5 in größerem Maßstab den Schnitt durch den Windabweiser entlang der Linie V-V der Fig. 1,

Fig. 6 eine Seitenansicht einer der beiden Schenkelfedern des Windabweisers nach den Fign. 1 bis 5 in drei unterschiedlichen Stellungen und

Fig. 7 einen Schnitt entsprechend der Fig. 3 für eine abgewandelte Ausführungsform des Fahrzeugdaches.

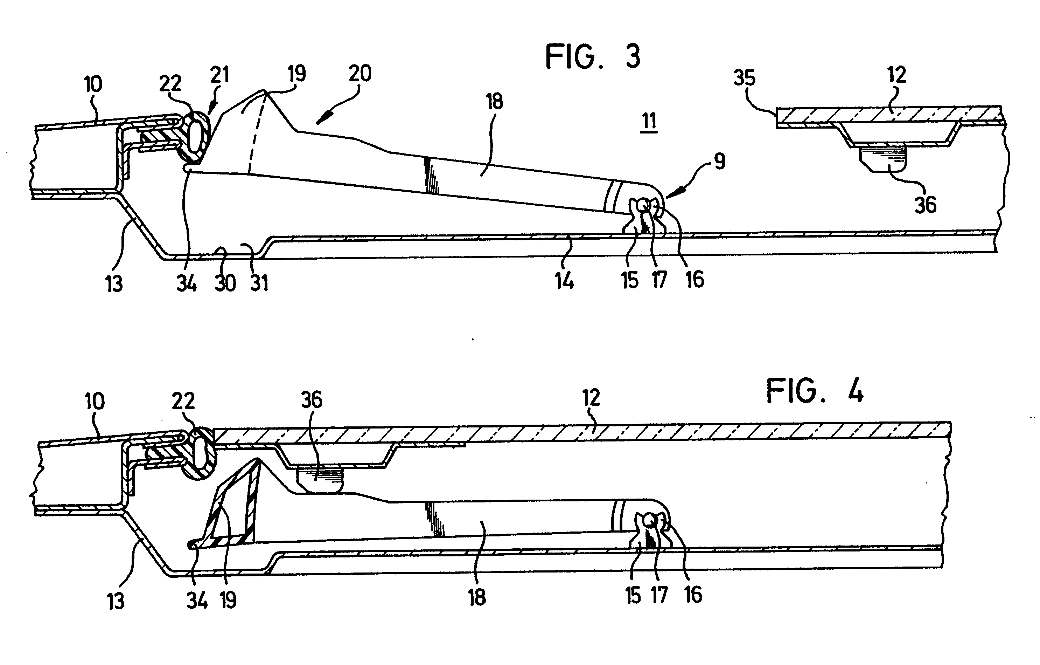

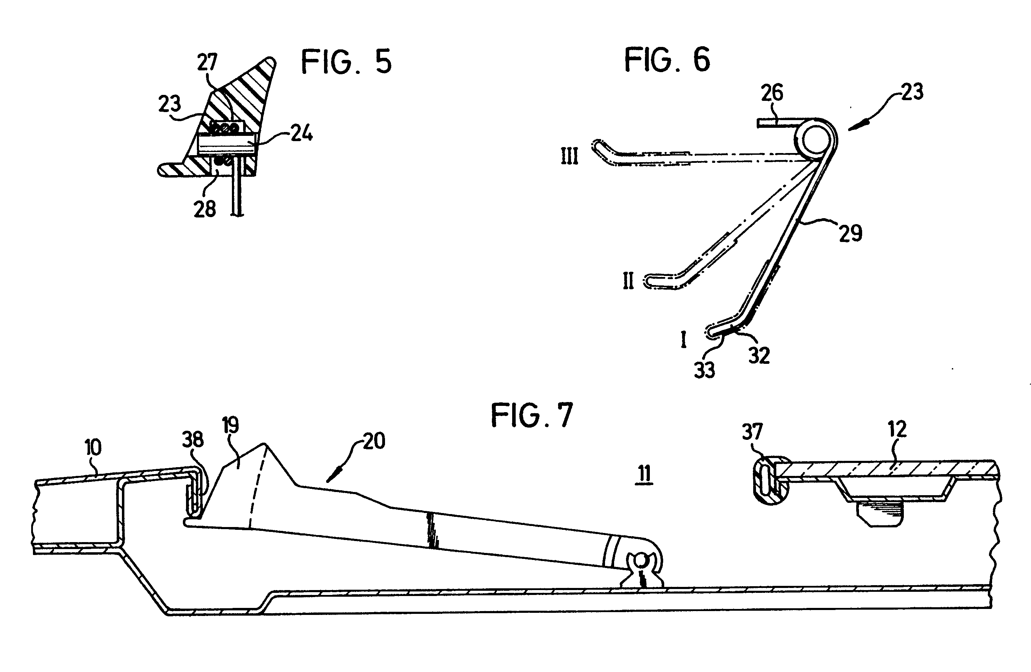

In der festen Dachfläche 10 eines Fahrzeugdachs ist entsprechend den Fign. 3 und 4 eine Dachöffnung 11 vorgesehen, die mittels eines verschiebbaren starren Deckels 12 wahlweise verschlossen oder mindestens teilweise freigelegt werden kann. Die Dachöffnung ist vorne und seitlich von einem Dachrahmen 13 umgeben, der in bekannter Weise in Fahrzeuglängsrichtung verlaufende Führungsschienen (nicht dargestellt) aufweisen kann, an denen der Deckel 12 über Gleitschuhe oder dergleichen (gleichfalls nicht veranschaulicht) geführt ist. Das Dach kann, wie bekannt, als Schiebedach oder als Hebeschiebedach ausgeführt sein. Der Deckel 12 kann beim Zurückschieben unter oder über dem hinter der Hinterkante der Dachöffnung 11 befindlichen Teil der festen Dachfläche 10 zu liegen kommen.

Das Fahrzeugdach ist im wesentlichen spiegelsymmetrisch zu einer Längsmittelachse ausgebildet. Die nachstehende Erläuterung der einen Seite des Daches samt Windabweiser gilt daher sinngemäß auch für die andere Seite. Die vorliegend verwendeten Be griffe "vorne" und "hinten" beziehen sich auf das zugehörige Fahrzeug bzw. dessen Vorwärtsfahrtrichtung.

An dem seitlichen Teil 14 des Dachrahmens 13 ist ein Lagerbock 15 befestigt, der eine teilweise offene, sich über einen Kreisbogen von mehr als 180° erstreckende Lagerpfanne 16 aufweist. In die Lagerpfanne 16 wird bei der Montage des Daches unter elastischer Verformung der Lagerpfanne ein Lagerbolzen 17 eingeclipst. Der Lagerbolzen 17 ist an dem hinteren Ende eines Ausstellarms 18 angeformt, und er bildet zusammen mit der Lagerpfanne 16 ein Schwenklager 19 für den Ausstellarm 18. Der Ausstellarm 18 ist ebenso wie ein weiterer Ausstellarm 18 auf der gegenüberliegenden Seite der Dachöffnung 11 mit einem Luftleitprofil 19 eines insgesamt mit 20 bezeichneten Windabweisers einstückig verbunden.

Das langgestreckte Luftleitprofil 19 verläuft quer zur Dachöffnung 11 entlang deren Vorderkante 21, die in dem in den Fign. 3 und 4 veranschaulichten Ausführungsbeispiel von einer mit der festen Dachfläche 10 verbundenen Dichtung 22 begrenzt ist. Das Luftleitprofil 19 trägt zwei Schenkelfedern 23, die spiegelsymmetrisch mit Bezug auf eine Längssymmetrieachse des Deckels 12 und des Windabweisers 20 angeordnet sind. Jede der Schenkelfedern 23 sitzt auf einem parallel zur Deckelverschieberichtung verlaufenden Lagerbolzen 24, der nahe dem unteren Rand des Luftleitprofils 19 liegt. Die Lagerbolzen 24 haben von dem benachbarten Außenende 25 des Luftleitprofils 19 einen Abstand, der etwa 20 % der Gesamtlänge des Luftleitprofils beträgt. Die Schenkelfedern 23 legen sich mit ihrem einen Schenkel 26 (Fig. 6) an die obere Wand 27 (Fig. 5) einer nach unten offenen Ausnehmung 28 des Luftleitprofils 19 an, im Bereich deren sich der Lagerbolzen 24 durch das Luftleitprofil hindurcherstreckt. Der andere Schenkel 29 der Schenkelfedern 23 stützt sich am Boden 30 einer vom Dachrahmen 13 gebildeten Wasserrinne 31 ab, die unterhalb der Vorderkante 21 der Dachöffnung 11 verläuft.

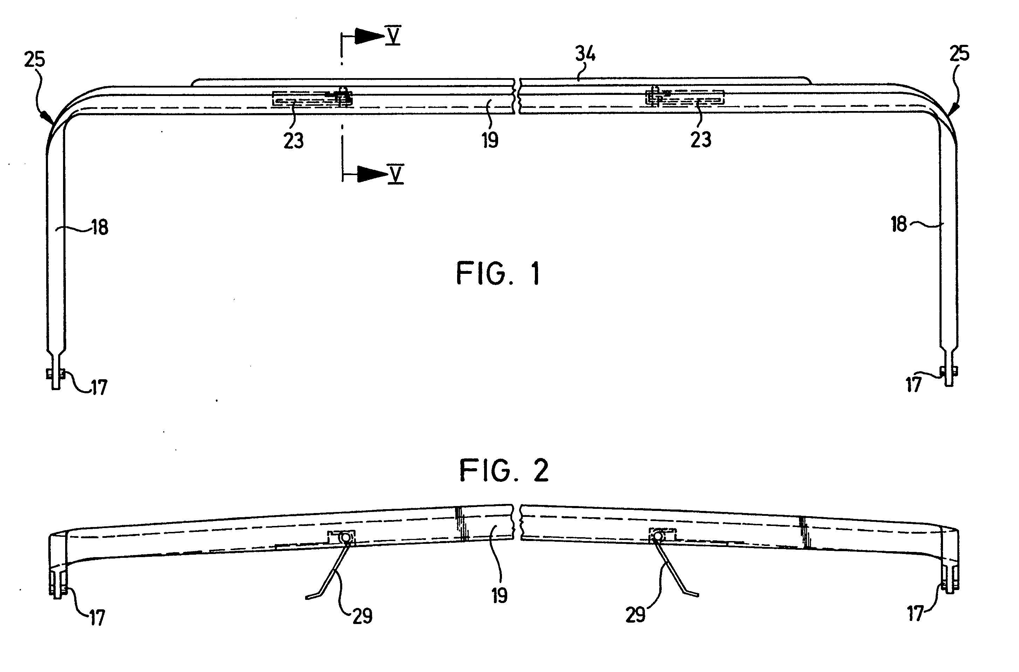

Das freie Ende des Schenkels 29 der Schenkelfeder 23 ist zu einer Gleitkufe 32 gebogen (Fig. 6), und der Schenkel 29 trägt im Bereich der Gleitkufe 32 einen Kunststoffüberzug 33, der die Reibung der Schenkelfeder 23 gegenüber dem Boden 30 der Wasserrinne 31 herabsetzt und der außerdem geräuschmindernd wirkt. Wie insbesondere aus Fig. 2 zu erkennen ist, sind die mit der Wasserrinne 31 zusammenwirkenden Schenkel 29 der beiden Schenkelfedern 23 nach außen in Richtung auf die benachbarte Seitenkante der Dachöffnung 11 gerichtet.

Im entspannten Zustand der Schenkelfedern 23 hat der Schenkel 29 die in Fig. 6 bei I dargestellte Relativlage mit Bezug auf den Schenkel 26. Im montierten Zustand üben die Schenkelfedern 23 auf den Windabweiser 20 eine Federkraft derart aus, daß bei mindestens teilweise zurückgeschobenem Deckel 12 die Ausstellarme 18 um die Schwenklager 9 in Fig. 3 im dem Uhrzeigersinn verschwenkt werden. Dabei stellen sich die Schenkel 29 der Schenkelfedern 23 in der Wasserrinne 31 auf, bis eine Anschlagleiste 34 an einem von der Dichtung 22 gebildeten Widerlager anstößt. Die Anschlagleiste springt vom unteren vorderen Rand des Luftleitprofils 19 nach vorne vor. Sie ist an dem Luftleitprofil einstückig angeformt, und sie erstreckt sich nahezu über die volle Breite des Luftleitprofils, wie dies insbesondere aus Fig. 1 zu erkennen ist. Wenn der Windabweiser 20 von den Schenkelfedem 23 in die durch das Zusammenwirken von Widerlager (Dichtung 22) und Anschlagleiste 34 bestimmte Betriebsstellung verschwenkt ist, haben die Schenkel 29 die in Fig. 6 bei II angedeutete Relativlage mit Bezug auf die Schenkel 26. Dabei ist die von den Schenkelfedern 23 ausgeübte Federkraft auf die Biegefestigkeit der aus dem Luftleitprofil 19 und der Anschlagleiste 34 bestehenden Baugruppe derart abgestimmt, daß dieser Baugruppe durch Anpressen der Anschlagleiste 34 an das bei diesem Ausführungsbeispiel von der Dichtung 22 gebildete Widerlager selbsttätig eine Wölbung in Längsrichtung des Luftleitprofils 19 aufgedrückt wird, welche mindestens näherungsweise der Dachwölbung entspricht. Gegebenenfalls kann dabei auch die Dichtung 22 in gewissem begrenztem Umfang verformt werden. Insgesamt wird für eine selbsttätige Anpassung der Wölbung der eine relativ niedrige Biegefestigkeit aufweisenden Baugruppe 19, 34 an die jeweilige Dachwölbung gesorgt. Unabhängig von Fertigungs- und Montagetoleranzen des Daches und des Windabweisers und ohne daß es einer Höheneinstellung des Windabweisers bedarf, ist stets eine einwandfreie Ausrichtung des Luftleitprofils 19 mit Bezug auf die feste Dachfläche 10 gewährleistet. Damit sind optimale Windleiteigenschaften sichergestellt. Störende Windgeräusche werden minimiert. Wie aus Fig. 3 hervorgeht, braucht das Luftleitprofil 19 in seiner Betriebsstellung über die feste Dachfläche 10 nur relativ wenig nach oben vorzuragen.

Wird der Deckel 12 nach vorne in seine Schließstellung geschoben (Fig. 4) trifft ein nahe der Vorderkante 35 des Deckels 12 an der Deckelunterseite sitzender Nocken 36 auf jeden der beiden Ausstellarme 18. Die Ausstellarme 18 werden entgegen der Kraft der Schenkelfedern 23 in den Fign. 3 und 4 entgegen dem Uhrzeigersinn verschwenkt. Dadurch wird das Luftleitprofil 19 abgesenkt. Die Gleitkufen 32 am freien Ende der Schenkel 29 wandern entlang dem Boden 30 der Wasserrinne 31 nach außen, bis die Schenkel 29 schließlich die in Fig. 6 bei III dargestellte Relativposition gegenüber den Schenkeln 26 einnehmen. Dabei verschwinden die Schenkelfedern 23 vollständig in der zugehörigen Ausnehmung 28 des Luftleitprofils 19.

Es versteht sich, daß das mit der Anschlagleiste 34 des Windabweisers 20 zusammenwirkende Widerlager keine dachfeste Dichtung entsprechend der Dichtung 22 zu sein braucht. Beispielsweise zeigt Fig. 7 eine abgewandelte Ausführungsform, bei welcher der Deckel 12 mit einer ringsumlaufenden Dichtung 37 ausgestattet ist und die Anschlagleiste 34 in der Betriebsstellung des Windabweisers 20 gegen ein Widerlager angepreßt wird, das von einer Abkantung 38 des Daches gebildet wird.

Das Luftleitprofil 19 kann vorzugsweise als nach unten offenes Hohlspritzteil ausgebildet sein. Bei dem Luftleitprofil kann es sich aber auch um einen im Gasinnendruckverfahren hergestellten Hohlkörper handeln, der nur im Bereich der Ausnehmungen 28 nach unten offen ist.

## Ansprüche

1. Windabweiser für Fahrzeugdächer mit einem verschiebbaren Deckel zum wahlweisen Verschließen oder mindestens teilweisen Freigeben einer Dachöffnung, wobei der Windabweiser ein an der Vorderkante der Dachöffnung angeordnetes, langgestrecktes, quer zur Dachöffnung verlaufendes, unter dem Einfluß von Federkraft in eine Betriebsstellung ausstellbares Luftleitprofil und damit verbundene, zu beiden Seiten der Dachöffnung angeordnete Ausstellarme aufweist, die im Bereich ihres von dem Luftleitprofil abliegenden hinteren Endes an einem dachfesten Teil schwenkbar angelenkt und durch Verschieben des Deckels in die Dekkelschließstellung in eine Lage verschwenkbar sind, in der sie das Luftleitprofil in eine Außerbetriebsstellung absenken, und wobei das Luftleitprofil im

Bereich seiner von den Ausstellarmen abliegenden Kante eine sich mindestens nahezu über die volle Breite des Luftleitprofils erstreckende Anschlagleiste trägt, die sich in der Betriebsstellung des Windabweisers gegen ein Widerlager an der Vorderkante der Dachöffnung anlegt und dadurch die Ausstellbewegung des Windabweisers begrenzt, **dadurch gekennzeichnet,** daß die Federkraft auf die Biegefestigkeit der aus dem Luftleitprofil (19) und der Anschlagleiste (34) bestehenden Baugruppe derart abgestimmt ist, daß dieser Baugruppe durch Anpressen der Anschlagleiste an das Widerlager (Dichtung 22, Abkantung 38) der Dachöffnung (11) selbsttätig eine der Dachwölbung mindestens näherungsweise entsprechende Wölbung in Längsrichtung des Luftleitprofils aufgezwungen wird.

2. Windabweiser nach Anspruch 1, dadurch gekennzeichnet, daß die aus Luftleitprofil (19) und Anschlagleiste (34) bestehende Baugruppe im entspannten Zustand eine mit dem Sollwert der Dachwölbung übereinstimmende Sollwölbung hat.

3. Windabweiser nach Anspruch 1 oder 2, dadurch gekennzeichnet, daß das Luftleitprofil (19) und die Anschlagleiste (34) einstückig miteinander verbunden sind.

4. Windabweiser nach einem der vorhergehenden Ansprüche, dadurch gekennzeichnet, daß das Luftleitprofil (19) und die Ausstellarme (18) einstükkig miteinander verbunden sind.

5. Windabweiser nach einem der vorhergehenden Ansprüche, dadurch gekennzeichnet, daß zum Aufbringen der Federkraft mindestens eine mit dem Luftleitprofil (19) verbundene Schenkelfeder (23) vorgesehen ist, deren einer Schenkel (26) sich an dem Luftleitprofil (19) und deren anderer Schenkel (29) sich an einem unter dem Luftleitprofil angeordneten, dachfesten Teil (Wasserrinne 31) abstützt.

6. Windabweiser nach Anspruch 5, dadurch gekennzeichnet, daß das freie Ende des mit dem dachfesten Teil (Wasserrinne 31) zusammenwirkenden Schenkels (29) der Schenkelfeder (23) zu einer Gleitkufe (32) gebogen ist.

7. Windabweiser nach Anspruch 6, dadurch gekennzeichnet, daß mindestens der mit dem dachfesten Teil (Wasserrinne 31) zusammenwirkende Schenkel (29) der Schenkelfeder (23) einen reibungs- und/oder geräuschmindernden Kunststoffüberzug (33) trägt.

8. Windabweiser nach einem der Ansprüche 5 bis 7, dadurch gekennzeichnet, daß in der Außerbetriebsstellung des Windabweisers (20) die Schenkelfeder (23) in einer nach unten offenen Ausnehmung (28) des Luftleitprofils (19) vollständig verschwindet.

9. Windabweiser nach einem der Ansprüche 5 bis 8, dadurch gekennzeichnet, daß die Schenkelfeder (23) auf einem parallel zur Deckelverschieberichtung verlaufenden Lagerbolzen (24) sitzt.

10. Windabweiser nach Anspruch 9, dadurch gekennzeichnet, daß zwei mit Bezug auf eine Längssymmetrieachse des Deckels (12) spiegelsymmetrisch angeordnete Schenkelfedern (23) vorgesehen sind, deren mit dem dachfesten Teil (Wasserrinne 31) zusammenwirkender Schenkel (29) jeweils nach außen in Richtung auf die benachbarte Seitenkante der Dachöffnung (11) weist.

11. Windabweiser nach Ansprüchen 9 und 10, dadurch gekennzeichnet, daß die Lagerbolzen (24) der Schenkelfedern (23) von dem benachbarten Außenende (25) des Luftleitprofils (19) einen Abstand haben, der zwischen 10 und 30 % der Gesamtlänge des Luftleitprofils beträgt.

12. Windabweiser nach einem der vorhergehenden Ansprüche, dadurch gekennzeichnet, daß das Luftleitprofil (19), gegebenenfalls zusammen mit der Anschlagleiste (34) und/oder den Ausstellarmen (18), als Kunststoff-Hohlspritzteil oder als im Gasinnendruckverfahren hergestelltes Kunststoffspritzteil ausgebildet ist.

13. Windabweiser nach einem der vorhergehenden Ansprüche, dadurch gekennzeichnet, daß die Schwenklager (9) der Ausstellarme (18) eine für die Montage elastisch verformbare Lagerpfanne (16) aufweisen, in die ein Lagerbolzen (17) eingeclipst wird.

14. Windabweiser nach Anspruch 13, dadurch gekennzeichnet, daß die Lagerbolzen (17) an den Ausstellarmen (18) angeformt sind.

V
25
34
25
23
19
23
V
18
18
17
17
19
17
29
29
17

FIG. 1

FIG. 2

FIG. 3
11
12
36
35
9
16
17
15
14
18
20
19
21
31
30
22
34
10
13
FIG. 4
12
16
17
15
18
36
19
22
34
10
13

FIG. 5
24
27
28
23
FIG. 6
23
29
26
32
33
I
II
III
FIG. 7
12
37
11
20
19
38
10